Europäisches Patentamt

European Patent Office

Office européen des brevets

(19)

(11) Numéro de publication: **0 299 832**
**B1**

(12) **FASCICULE DE BREVET EUROPEEN**

(45) Date de publication du fascicule du brevet:
**07.11.90**

(51) Int. Cl.⁵: **F02K 1/12, F02K 1/15**

(21) Numéro de dépôt: **88401678.3**

(22) Date de dépôt: **30.06.88**

(54) Tuyère d'éjection axisymétrique de turboréacteur convergente-divergente.

(30) Priorité: **08.07.87 FR 8709672**

(43) Date de publication de la demande:
**18.01.89 Bulletin 89/3**

(45) Mention de la délivrance du brevet:
**07.11.90 Bulletin 90/45**

(84) Etats contractants désignés:
**DE FR GB SE**

(56) Documents cités:
**EP-A- 0 033 044**
**EP-A- 0 149 943**
**FR-A- 1 124 336**
**FR-A- 2 016 744**
**FR-A- 2 030 532**

(73) Titulaire: **SOCIETE NATIONALE D'ETUDE ET DE CONSTRUCTION DE MOTEURS D'AVIATION, "S.N.E.C.M.A.", 2, boulevard du Général Martial Valin, F-75015 Paris(FR)**

(72) Inventeur: **Berneuil, Yves Roger Jean, 27, rue de Dunkerque, F-75010 Paris(FR)**
Inventeur: **Jourdain, Gérard Ernest André, 4, Résidence l'Arcadie, F-91100 Saintry(FR)**

(74) Mandataire: **Moinat, François et al, S.N.E.C.M.A. Service des Brevets Boîte Postale 81, F-91003 Evry Cédex(FR)**

## Description

La présente invention concerne une tuyère d'éjection de turboréacteur, du type à convergent et à divergent et plus particulièrement le système de commande et de synchronisation de ladite tuyère.

US-A-3 730 436 donne un exemple de réalisation d'une tuyère d'éjection de turboréacteur comportant un premier ensemble de volets formant un convergent, un second ensemble de volets formant un divergent et un troisième ensemble extérieur de volets dits volets froids. Le dispositif de commande comporte une pluralité de vérins reliés à un anneau de commande qui agit sur les volets commandés par l'intermédiaire d'une biellette de commande. Un dispositif de synchronisation à liaison télescopique est placé entre des volets adjacents.

FR-A-2 202 234 décrit une tuyère comportant des poutres orientées longitudinalement qui portent des vérins, des volets et des leviers transversaux. Le déplacement commandé par la tige de vérin est transmis par un palonnier et des biellettes et la synchronisation est assurée par lesdits leviers.

EP-A-0149 943 décrit une tuyère d'éjection dans laquelle, en vue d'assurer la synchronisation, les bords voisins des leviers de commande des volets sont accouplés par un dispositif de longueur variable comprenant une rotule mâle fixée par un bras à un bord d'un levier et engagée dans une rotule femelle portée par une chape qui pivote dans une fente du bord du levier adjacent.

Tout en assurant les fonctions recherchées de commande et de synchronisation et par rapport aux solutions antérieures connues, l'invention vise à obtenir une réduction de la masse, à n'utiliser qu'un nombre réduit d'éléments assurant la simplicité du système, à favoriser la facilité de mise en oeuvre tout en assurant la meilleure fiabilité du système.

Enfin, ces résultats doivent être obtenus en conservant un rendement de cinématique élevé de manière à réduire l'effort de commande exigé des vérins, correspondant également à une réduction de leur masse et à une réduction d'encombrement, notamment dans le sens radial par rapport à l'axe de rotation de la turbomachine.

La tuyère d'éjection axisymétrique de turboréacteur conforme à l'invention est caractérisée en ce que chaque levier de commande porte à chaque extrémité, vue dans un sens transversal par rapport à la tuyère d'éjection ou au turboréacteur, une biellette triangulaire dont la base est articulée sur ledit levier et dont le sommet opposé coopère avec le sommet de la biellette portée par le levier de commande voisin au moyen d'une rotule de manière à assurer leur synchronisation.

Avantageusement, chaque levier de commande est relié à un volet divergent par au moins deux biellettes respectivement articulées à chacune de leurs extrémités, chacune, d'une part sur ledit levier de commande et, d'autre part, sur ledit volet divergent.

De manière avantageuse, chaque levier de commande a la forme d'un fût cylindrique portant deux leviers amont d'articulation aux poutres, deux leviers aval articulés par leur extrémité aval respectivement à deux desdites biellettes, un levier central d'articulation à la tige de vérin et, à chaque extrémité dudit fût, ladite biellette triangulaire articulée par un axe.

La tuyère d'éjection conforme à l'invention permet d'obtenir les résultats avantageux énoncés précédemment. Notamment, dans une application particulière de tuyère convergente-divergente, un rendement cinématique global d'au moins 0,85 est obtenu. Le bon rendement et la grande course qui est donnée aux vérins réduisent l'effort de commande et par suite un nombre réduit de vérins peut être utilisé ; dans un exemple de réalisation, cinq vérins suffisent pour la commande de la tuyère et une pression modérée d'alimentation est suffisante, réduite, par exemple, de 30% par rapport à une solution antérieure.

Avantageusement, un dispositif unique présentant des qualités remarquables de simplicité et de fiabilité assure à la fois les fonctions de commande et de synchronisation de la tuyère d'éjection.

D'autres caractéristiques et avantages de l'invention seront mieux compris à la lecture qui va suivre d'un mode de réalisation de l'invention, en référence aux dessins annexés sur lesquels :

- la figure 1 représente une demi-vue schématique en coupe par un plan passant par l'axe de rotation de la turbomachine d'une tuyère d'éjection axisymétrique conforme à l'invention ;
- la figure 2 représente une vue partielle schématique développée suivant la flèche F de la tuyère d'éjection représentée à la figure 1 ;
- la figure 3 représente un détail des poutres de la tuyère d'éjection vu suivant la flèche F1 de la figure 2 ;
- la figure 4a représente dans une position particulière un détail agrandi du dispositif de synchronisation de la tuyère d'éjection représentée à la figure 2 ;
- la figure 4b montre une schématisation géométrique du dispositif de synchronisation représenté à la figure 4a ;
- les figures 5a, 5b, et 5c représentent chacune une vue schématique de la position des volets de tuyère d'éjection, dans une représentation analogue à celle de la figure 1 et montrant trois configurations distinctes de ladite tuyère d'éjection.

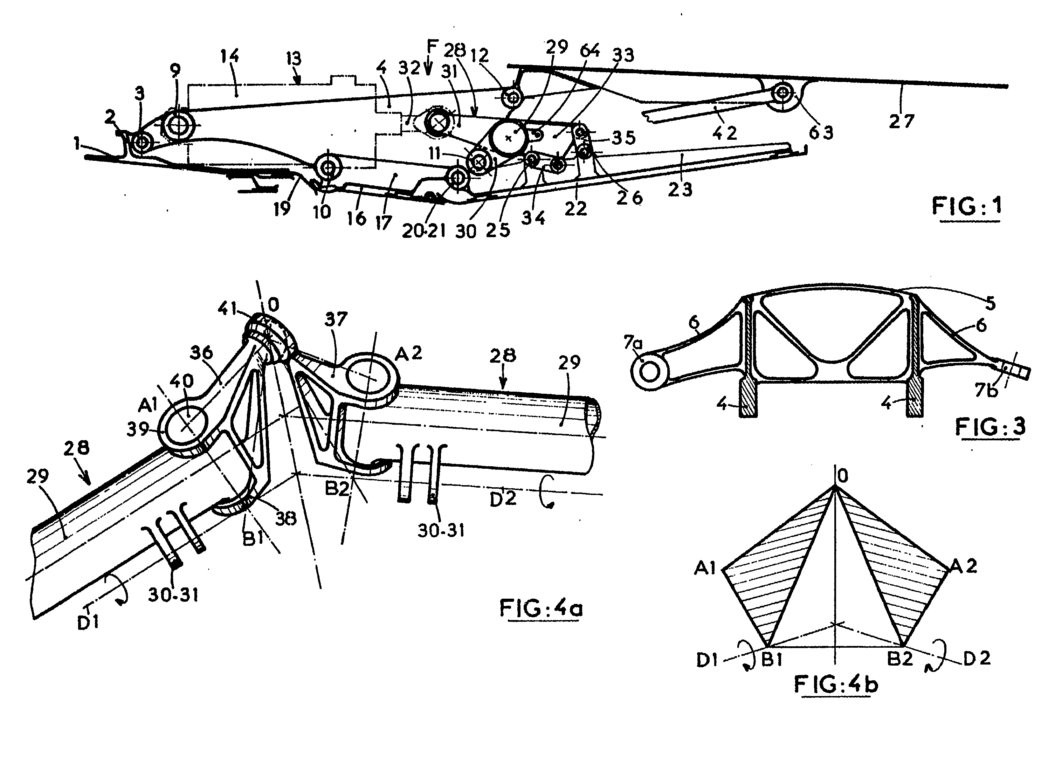

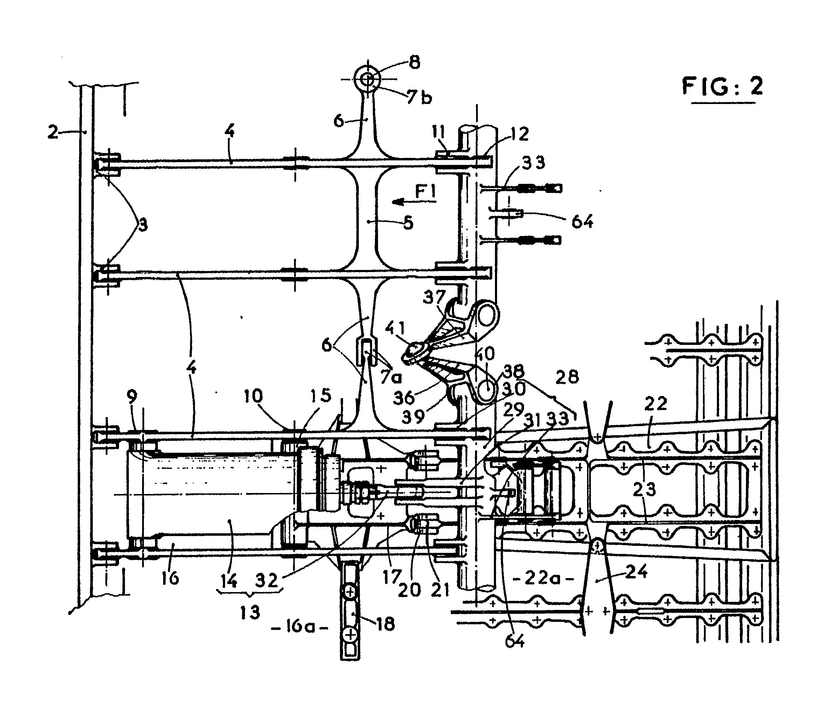

La tuyère d'éjection axisymétrique selon la présente invention, qui est illustrée schématiquement et partiellement sur les figures 1 et 2, comprend tout d'abord une structure porteuse, de forme annulaire, disposée dans le prolongement de la sortie du canal fixe 1 de ladite tuyère. Ledit canal 1 comporte notamment une bride annulaire 2 qui porte une pluralité de chapes 3 régulièrement espacées et disposées du côté aval, défini par rapport au sens normal de circulation des gaz dans la turbomachine et son canal d'éjection. Cette structure porteuse est formée d'une pluralité de poutres 4 fixées à une extrémité audit canal 1 au moyen des chapes 3 à partir desquelles lesdites poutres 4 sont disposées longitudinalement par rapport à la turbomachine et au canal 1 prolongé vers l'aval par l'ensemble de tuyère d'éjection. Les poutres 4 sont solidarisées par paires par des bras de liaison 5 qui présentent une structure en pont dont le détail est plus clairement visible sur la figure 3. D'une paire à l'autre, les poutres 4 sont reliées par des pattes de liaison 6 en prolongement des bras 5. Les pattes 6 sont terminées par des chapes coopérantes 7a et 7b assemblées par des axes d'articulation 8. Alternativement les chapes telles que 7a sont orientées selon un plan perpendiculaire à l'axe de la turbomachine ou telles que 7b tangentiellement à un cylindre d'axe confondu avec celui de la turbomachine. Cette particularité des liaisons entre les paires de poutres 4 est destinée à compenser, lors du montage, d'éventuels défauts de fabrication ou à annuler un effet défavorable éventuel d'empilements des tolérances. Chaque poutre 4 comporte quatre séries de bossages susceptibles de constituer des points d'articulation dont l'utilisation sera décrite en détails ci-après et respectivement désignés par 9 du côté amont, par 10 vers la mi-longueur, par 11 du côté aval et vers le bord radialement intérieur par rapport à l'axe de la turbomachine et de la tuyère d'éjection et par 12 du coté aval et vers le bord radialement extérieur par rapport à l'axe de la turbomachine et de la tuyère d'éjection. Entre deux poutres 4 d'une même paire est placé un vérin 13 dont le corps 14 est fixé, de manière articulée et à son extrémité amont, sur les poutres 4, au niveau des articulations 9. Aux articulations 10 des deux poutres 4 est fixé au moyen de chapes articulées 15 un volet 16 dit convergent. Les volets 16 sont réalisés selon des modes bien connus dans des applications similaires aux tuyères d'éjection, notamment de turboréacteur et comportent notamment des raidisseurs 17 sur leur face externe et de même, de manière couramment utilisée et également connue, chaque volet convergent commandé 16 est associé à au moins deux volets suiveurs 16a placés de part et d'autre et maintenus, dans le mode représenté à titre d'exemple, par des pontets 18 reliant le volet commandé 16 à partir des raidisseurs 17 à un volet suiveur 16a voisin. Les volets commandés et suiveurs forment ainsi un ensemble annulaire continu présentant une surface interne étanche aux gaz en cours d'éjection. Des dispositions connues assurent notamment l'étanchéité entre les bords coopérants des volets commandés 16 et suiveurs 16a. De même, l'étanchéité est également assurée au niveau des articulations 10/15 entre le bord amont des volets convergents 16 et 16a et le bord aval du canal fixe 1. Notamment et à titre d'exemple représenté à la figure 1, une tôle telle que 19 assure le recouvrement de part et d'autre. Le volet convergent 16 porte à son extrémité aval une articulation, par exemple, comme représenté à la figure 2, sous forme de deux chapes 20 qui coopèrent avec deux chapes 21 placées au bord amont d'un volet 22 dit divergent, placé en aval du volet convergent 16 et articulé sur lui de cette manière. Les volets 22, réalisés comme indiqué auparavant pour les volets 16, comportent également des raidisseurs 23 sur leur face externe. De manière similaire aux dispositions qui ont été décrites pour l'ensemble convergent, l'ensemble dit divergent comporte également des volets suiveurs 22a reliés aux volets commandés 22 par des pontets 24 à partir des raidisseurs 23 et les diverses étanchéités sont également assurées entre volets de l'ensemble divergent ainsi qu'au niveau des articulations des volets divergents sur les volets convergents. Lesdits raidisseurs 23 des volets divergents commandés 22 portent également des bossages formant articulations 25 et 26 dont la fonction sera précisée plus en détails plus loin. Les articulations 12 des poutres 4 supportent également des volets 27 dits froids formant une couronne complète continue qui enveloppe l'ensemble des volets convergents 16 et divergents 22 dits chauds constituant une tuyère primaire d'éjection. De manière habituelle dans les applications aux turboréacteurs et notamment dans le mode de réalisation représenté à titre d'exemple sur les figures annexées, l'extrémité aval des volets froids 27 est située axialement en aval de l'extrémité aval de ladite tuyère primaire. Les articulations 11 des poutres 4 d'une même paire supportent un levier de commande 28 qui est constitué d'un fût cylindrique 29 disposé transversalement par rapport à l'axe de la turbomachine et de la tuyère d'éjection et radialement écarté à l'extérieur des volets chauds convergents 16 et divergents 22 de tuyère primaire, mais à l'intérieur de la couronne de volets froids 27, toujours par rapport au même axe de référence. Ledit fût cylindrique 29 porte deux leviers amont 30 dont l'extrémité coopère avec lesdites articulations 11 des poutres 4, un levier central 31 dont l'extrémité coopère avec la tige 32 du vérin 13 de commande, deux leviers aval 33 dont l'extrémité est respectivement reliée par des biellettes articulées 34 et 35 aux articulations 25 et 26 décrites auparavant et placées sur le volet divergent commandé 22.

Entre deux leviers de commande 28 et formant liaison est placé un dispositif destiné à assurer la synchronisation de l'ensemble de la tuyère d'éjection en fonctionnement et qui est réalisé d'une manière remarquable conformément à l'invention. Ce dispositif est en effet constitué de deux paires de biellettes triangulaires 36 et 37. Chaque biellette triangulaire, telle que 36, comporte à sa base deux chapes 38 et 39 formant deux sommets du triangle. Ces deux chapes 38 et 39 coiffent l'extrémité du fût cylindrique 29 d'un levier de commande 28 sur lequel ladite biellette 36 est articulée au moyen d'un axe 40. Les deux biellettes 36 et 37 respectivement articulées aux extrémités homologues des fûts de deux leviers de commande 28 voisins sont réunies au niveau de leur sommet respectif opposé à ladite base au moyen d'un joint articulé à rotule 41.

Le fonctionnement de la tuyère axisymétrique d'éjection de turboréacteur conforme à l'invention se déduit aisément de la description qui vient d'en être faite. Un nombre déterminé de vérins tels que 13 montés de la façon qui a été décrite sont répartis autour de la tuyère de manière régulière et sont alimentés en fluide hydraulique de façon bien connue dans ce genre d'applications. Dans chaque application particulière et en fonction des conditions d'utilisation prévues pour la tuyère d'éjection, l'effort requis pour la manoeuvre des volets peut être déterminé d'où résultent les différents choix pour la mise en oeuvre, concernant la pression d'alimentation en fluide hydraulique, le dimensionnement de chaque vérin 13 et leur nombre. Il s'ensuit qu'un vérin 13 agit sur le levier de commande associé 28 par le déplacement de la tige 32 de vérin transmis au levier central 31 du levier de commande 28 dont le déplacement est transmis par les leviers aval 33 et les biellettes 34 et 35 au volet divergent 22 dont le pivotement du bord amont provoque celui du volet convergent 16. Par ailleurs, une bielle 42 est articulée à une extrémité sur une chape 63 portée par le volet froid 27 et à son autre extrémité soit sur une chape 64 portée par le levier de commande 28, soit sur le volet divergent 22, assurant ainsi l'asservissement des volets froids 27 aux variations de la tuyère primaire d'éjection.

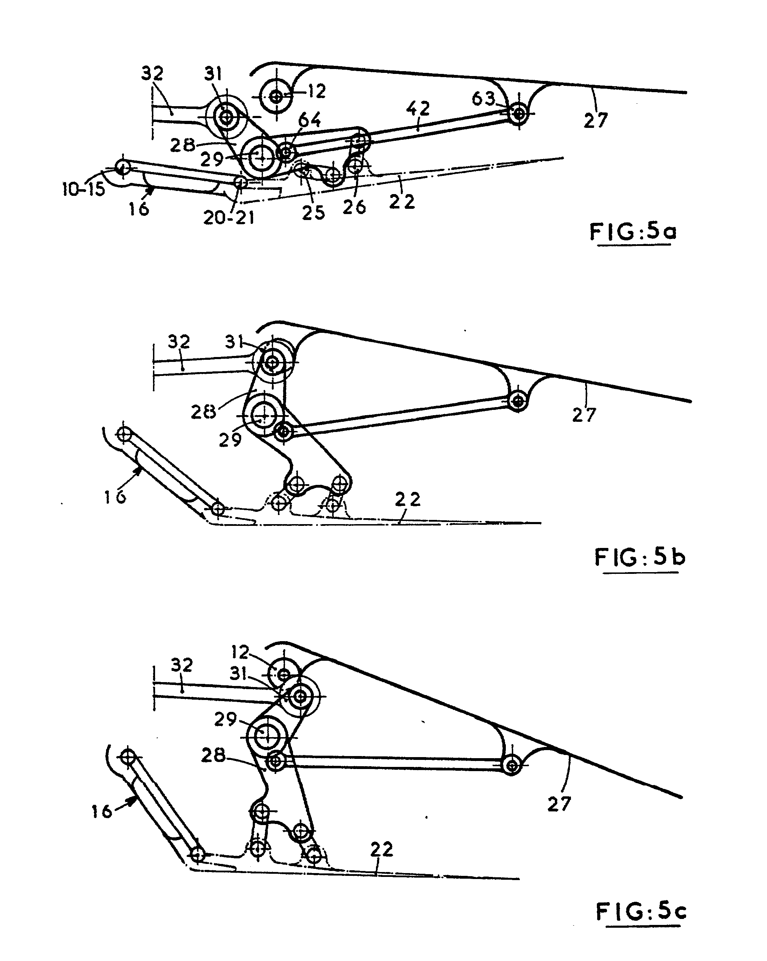

Les figures 5a, 5b et 5c montrent trois exemples de configurations distinctes de la tuyère d'éjection. On note en particulier que selon les phases de mission définies pour l'avion, on peut obtenir, soit comme représenté à la figure 5a, une configuration dite convergente-divergente, soit, comme représenté à la figure 5b, une configuration dite cylindrique, soit, comme représenté à la figure 5c, une configuration convergente-convergente.

Dans toutes les phases de fonctionnement de la tuyère d'éjection conforme à l'invention, il est remarquable qu'un ensemble annulaire unique constitué par les leviers de commande 28 reliés par les biellettes triangulaires 36,37 assure à la fois la commande de position des volets de la tuyère et la synchronisation de l'ensemble de tuyère. En particulier, le mode de fonctionnement du dispositif de synchronisation ressort de la représentation schématique qui est donnée sur les figures 4a et 4b. La schématisation géométrique de la figure 4b représente les biellettes triangulaires 36 et 37 associées du dispositif de synchronisation par des triangles $0A_1B_1$ et $0A_2B_2$, 0 correspondant au centre du joint à rotule 41 commun aux deux biellettes 36 et 37, $A_1$, $B_1$, $A_2$, $B_2$ correspondant aux centres respectifs des articulations des bases des biellettes 36 et 37 sur les extrémités homologues de deux fûts cylindriques 29 des leviers de commande 28 voisins.

Par construction, les axes géométriques $A_1 B_1$ et $A_2 B_2$ sont concourants respectivement avec un axe géométrique $D_1$ et $D_2$ des articulations 11 des leviers de commande 28 correspondant sur les poutres 4. De cette manière, une liaison du genre "à la cardan" est établie entre les deux leviers de commande 28 voisins. Lors d'une rotation d'un levier de commande 28 sous l'action des vérins 13, les points 0 se déplacent sur une circonférence dont le centre est situé sur $B_1 B_2$, dans le plan bissecteur du dièdre formé par les plans contenant les deux triangles $0A_1B_1$ et $0A_2B_2$ respectivement.

**Revendications**

1. - Tuyère d'éjection axisymétrique de turboréacteur comportant notamment :
- un ensemble de poutres (4) solidarisées par paires, montées longitudinalement, à intervalles réguliers, le long du pourtour du canal (1-2) fixe d'éjection, reliées d'une paire à l'autre par des moyens articulés (6 à 8) ;
- un ensemble annulaire de volets (16) commandés dits convergents ayant chacun son bord amont articulé sur lesdites poutres (4);
- un ensemble annulaire de volets (22) commandés dits divergents ayant chacun son bord amont articulé sur le bord aval de l'un des volets convergents (16) ;
- une pluralité de volets (16a, 22a) dits suiveurs, montés coulissants, respectivement entre lesdits volets commandés convergents (10) et divergents (22), lesdits volets commandés et suiveurs dits chauds constituant la tuyère primaire d'éjection (16, 16a, 22, 22a) ;
- une couronne de volets (27) dits froids ayant chacun son bord amont articulé sur lesdites poutres (4) et placés en position radiale, à l'extérieur des volets chauds par rapport à l'axe de rotation du turboréacteur (16, 16a; 22, 22a) ;
- une pluralité de vérins (13) fixés respectivement entre les poutres (4) desdites paires ;
- une pluralité de leviers de commande (28) ayant chacun un côté amont (30) articulé sur lesdites poutres (4), un moyen (31) de liaison à une tige (32) desdits vérins (13) et un côté aval (33) relié aux dits volets commandés (22);
- une pluralité de bielles (42) reliant chacune un volet froid (27) à la tuyère primaire de manière à assurer l'asservissement desdits volets froids (27), caractérisée en ce que chaque levier de commande (28) porte à chaque extrémité , vue dans un sens transversal par rapport à la tuyère d'éjection ou au turboréacteur, une biellette triangulaire (36,37) dont la base est articulée sur ledit levier (28) et dont le sommet opposé coopère avec le sommet de la biellette (36,37) portée par le levier de commande (28) voisin au moyen d'une rotule (41) de manière à assurer leur synchronisation.

2. - Tuyère d'éjection de turboréacteur selon la revendication 1 dans laquelle chaque levier de commande (28) est relié à un volet divergent (22) par au moins deux biellettes (34,35) respectivement articulées à chacune de leurs extrémités, chacune, d'une part, sur ledit levier de commande (28) et, d'autre part, sur ledit volet divergent (22).

3. - Tuyère d'éjection de turboréacteur selon la revendication 2 dans laquelle chaque levier de commande (28) a la forme d'un fût cylindrique (29) portant deux leviers amont (30) d'articulation auxdites poutres, deux leviers aval (33) articulés par leur extrémité aval respectivement à deux desdites biellettes (34,35), un levier central (31) d'articulation à la tige (32) de vérin et, à chaque extrémité dudit fût, ladite biellette (36,37) triangulaire articulée par un axe (40).

4. - Tuyère d'éjection de turboréacteur selon la revendication 3 dans laquelle les axes géométriques (A1 B1, A2 B2) des axes d'articulation (40) des bases des biellettes triangulaires (36, 37) d'une même paire coopérantes sont concourants respectivement avec les axes géométriques (D1, D2) des articulations des leviers de commande (28) sur les poutres (4).

5. - Tuyère d'éjection de turboréacteur selon l'une quelconque des revendications précédentes dans laquelle la bielle d'asservissement (42) d'un volet froid (27) est articulée à une extrémité sur une chape (63) portée par ledit volet froid (27) et à l'autre extrémité sur une chape portée par le volet divergent (22).

6. - Tuyère d'éjection de turboréacteur selon l'une quelconque des revendications 1 à 4 dans laquelle la bielle d'asservissement (42) d'un volet froid (27) est articulée à une extrémité sur une chape (63) portée par ledit volet froid (27) et à l'autre extrémité sur une chape (64) portée par ledit levier de commande (28).

**Patentansprüche**

1. Achsensymmetrische Schubdüse für ein Turboluftstrahltriebwerk mit einer Anordnung von paarweise miteinander verbundenen Tragstäben (4), die in Längsrichtung in regelmäßigen Abständen längs des Umfangs des festen Ausströmkanals (1–2) montiert und von einem Paar zum andern über gelenkige Mittel (6 bis 8) miteinander verbunden sind, einer ringförmigen Anordnung von als konvergierende Klappen bezeichneten gesteuerten Klappen (16), die jeweils mit ihrem stromaufwärtigen Rand an den Tragstäben (4) angelenkt sind, einer ringförmigen Anordnung von als divergierende Klappen bezeichneten gesteuerten Klappen (22), die jeweils mit ihrem stromaufwärtigen Rand an dem stromabwärtigen Rand einer der konvergierenden Klappen (16) angelenkt sind, einer Mehrzahl von als Folgeklappen bezeichneten Klappen (16a, 22a), die gleitbar zwischen den gesteuerten konvergierenden (16) bzw. divergierenden Klappen (22) montiert sind, wobei die als heiße Klappen bezeichneten gesteuerten Klappen und Folgeklappen die primäre Schubdüse (16, 16a, 22, 22a) bilden, einem Kranz von als kalte Klappen bezeichneten Klappen (27), die jeweils mit ihrem stromaufwärtigen Rand an den Tragstäben (4) angelenkt sind und, bezogen auf die Achse des Turboluftstrahltriebwerks (16, 16a, 22, 22a), in radialer Position außerhalb der heißen Klappen angeordnet sind, einer Mehrzahl von Stellzylindern (13), die jeweils zwischen den Paaren von Tragstäben (4) befestigt sind, einer Mehrzahl von Steuerhebeln (28), die jeweils eine an den Tragstäben (4) angelenkte stromaufwärtige Seite, ein Verbindungsmittel (31) zur Verbindung mit einer Stange (32) der Stellzylinder (13) und eine mit den gesteuerten Klappen (22) verbundene stromabwärtigen Seite aufweisen, einer Mehrzahl von Pleuelstäben (42), von denen jeder eine kalte Klappe (27) in der Weise mit der primären Düse verbindet, daß die Regelung der kalten Klappen (27) gewährleistet ist, dadurch gekennzeichnet, daß jeder Steuerhebel (28) an jedem, in bezug auf die Schubdüse oder das Turboluft-strahltriebwerk transversalen Ende einen dreieck-förmigen Schwingarm (36, 37) trägt, dessen Basis an dem genannten Steuerhebel (28) angelenkt ist und dessen gegenüberliegende Ecke über ein Gelenk (41) in der Weise mit der Ecke des von dem be-nachbarten Steuerhebel (28) getragenen Schwing-arm (36, 37) zusammenwirkt, daß ihre Synchronisation gewährleistet ist.

2. Schubdüse für ein Turboluftstrahltriebwerk nach Anspruch 1, bei der jeder Steuerhebel (28) mit einer divergierenden Klappe (22) über wenigstens zwei Schwingarme (34, 35) verbunden ist, von denen jeder mit seinen betreffenden Enden einerseits an dem genannten Steuerhebel (28) und andererseits an der divergierenden Klappe (22) angelenkt sind.

3. Schubdüse für ein Turboluftstrahltriebwerk nach Anspruch 2, bei der jeder Steuerhebel (28) die Form eines zylindrischen Schafts (29) hat, der zwei stromaufwärtige Hebel (30) zur gelenkigen Verbindung mit den Tragstäben, ferner zwei stromabwärtige Hebel (33), die über ihr stromabwärtiges Ende jeweils mit zwei der genannten Schwingarme (34, 35) gelenkig verbunden sind, einen zentralen Hebel (31) zur gelenkigen Verbindung mit der Stange (32) des Stellzylinders und an jedem seiner genannten Enden einen genannten dreieckförmigen Schwingarm (46, 47) trägt, der mittels einer Achse (14) angelenkt ist.

4. Schubdüse für ein Turboluftstrahltriebwerk nach Anspruch 3, bei der die geometrischen Achsen (A1, B1, A2, B2) der Gelenkverbindungen (40) der Basisseiten der dreieckförmigen Schwingarme (36, 37) ein und desselben zusammenwirkenden Paares mit den geometrischen Achsen (D1, D2) der Gelenkverbindungen der Steuerhebel (28) an den Tragstäben (4) in einem Punkt zusammenlaufen.

5. Schubdüse für ein Turboluftstrahltriebwerk nach einem der vorhergehenden Ansprüche, bei der der Pleuelstab (42) zur Regelung einer kalten Klappe (27) mit einem Endbereich an einem Bügel (63) angelenkt ist, der von der kalten Klappe (27) getragen ist, und mit dem anderen Endbereich an einem Bügel angelenkt ist, der von der divergierenden Klappe (22) getragen ist.

6. Schubdüse für ein Turboluftstrahltriebwerk nach einem der Ansprüche 1 bis 4, bei der der der Pleuelstab (42) zur Regelung einer kalten Klappe (27) mit einem Endbereich an einem Bügel (63) angelenkt ist, der von der kalten Klappe (27) getragen ist, und mit dem anderen Endbereich an einem Bügel angelenkt ist, der von dem Steuerhebel (28) getragen ist.

**Claims**

1. Axially symmetrical tail pipe of a jet engine notably comprising:
    – an assembly of beams (4) joined together in pairs, mounted longitudinally at regular intervals around the circumference of the fixed tail pipe (1-2), each pair being connected to the others by an articulated system (6 to 8);
    – an annular set of directly-controlled shutters (16) of the so-called convergent type each having its upstream edge hinged on the said beams (4);
    – an annular set of directly-controlled shutters (22) of the so-called divergent type each having its upstream edge hinged on the downstream edge of one of the convergent shutters (16);
    – a number of shutters (16a, 22a) of the so-called follower type, mounted so as to slide, respectively between the said directly-controlled convergent (10) [sic ? 16] and divergent (22) shutters, the said controlled and follower shutters constituting the primary tail pipe (16, 16a, 22, 22a);
- a ring of shutters (27) called cold shutters, each having its upstream edge hinged on the said beams (4) and placed in a position radially outside the hot shutters in relation to the axis of rotation of the gas turbine engine (16, 16a; 22, 22a);
- a number of rams (13) fixed respectively between the beams (4) of the said pairs;
- a number of control levers (28) each having an upstream side (30) articulated on the said beams (4), a means (31) of connecting them to a piston rod (32) of the said rams (13) and a downstream side (33) linked to the said directly-controlled shutters (22);
- a number of connecting rods (42) each linking one cold shutter (27) to the primary tail pipe in such a way as to ensure the servo-control of the said cold shutters (27), characterised in that each control lever (28) bears at each end, as seen in a transverse direction in relation to the tail pipe or to the jet engine, a triangular connecting rod (36, 37) whose base is pivoted on the said lever (28) and whose opposite point operates, by means of a ball and socket joint (41), in conjunction with the equivalent point of the connecting rod (36, 37) carried on the adjoining control lever (28).

2. Tail pipe of a jet engine in accordance with Claim 1 in which each control lever (28) is connected to a divergent shutter (22) by at least two links (34, 35) respectively articulated at both ends and each coupled at one end to the said control lever (28) and at the other to the said divergent shutter (22).

3. Tail pipe of a jet engine in accordance with Claim 2 in which each control lever (28) takes a cylindrical barrel shape (29) carrying the two upstream levers (30) hinged to the said beams, two downstream levers (33) articulated at their downstream end respectively to the said two links (34, 35), a central lever (31) articulated in relation to the piston rod (31) of the ram and, at each end of the said barrel, the said triangular connecting rod (36, 37) pivoting around a pin (40).

4. Tail pipe of a jet engine in accordance with Claim 3 in which the geometrical axes (A1 B1, A2, B2) of the pivot pins (40) of the bases of the triangular connecting rods (36, 37) of the same working pair coincide respectively with the geometrical axes (D1, D2) of the articulations of the control levers (28) on the beams (4).

5. Tail pipe of a jet engine in accordance with any of the preceding Claims in which the servo-connecting rod (42) of a cold shutter (27) is articulated at one end on a bracket (63) carried on the said cold shutter (27) and at the other end to a bracket carried on the divergent shutter (22).

6. Tail pipe of a jet engine in accordance with any of the Claims 1 to 4 in which the servo-connecting rod (42) of a cold shutter (27) is articulated at one end on a bracket (63) carried on the said cold shutter (27) and at the other end on a bracket (64) carried on the said control lever (28).

FIG:1

FIG:3

FIG:4b

FIG:4a

FIG: 2

FIG:5a

FIG:5b

FIG:5c